Europäisches Patentamt

European Patent Office

Office européen des brevets

(11) Numéro de publication: **0 251 896**
**A1**

## (12) DEMANDE DE BREVET EUROPEEN

(21) Numéro de dépôt: **87401448.3**

(22) Date de dépôt: **24.06.87**

(51) Int. Cl.⁴: **H 02 K 5/24**
**H 02 K 5/167**

(30) Priorité: **27.06.86 FR 8609360**

(43) Date de publication de la demande:
**07.01.88 Bulletin 88/01**

(84) Etats contractants désignés: **DE GB IT**

(71) Demandeur: **ETUDES TECHNIQUES ET REPRESENTATIONS INDUSTRIELLES E.T.R.I Société Anonyme**
**8 rue Boutard**
**F-92200 Neuilly-sur-Seine (FR)**

(72) Inventeur: **Gruber, François**
**878 Village Square**
**NC Monroe (US)**

**Renaud, André**
**4 rue Georges Clémenceau**
**78330 Fontenay-Le-Fleury (FR)**

(74) Mandataire: **Bouju, André**
**Cabinet Bouju 38 avenue de la Grande Armée**
**F-75017 Paris (FR)**

(54) **Moteur électrique à palier perfectionné.**

(57) Le moteur électrique, notamment pour ventilateur à hélice, comprend un stator (1) supporté par une carcasse de fixation (3) et un rotor (4) solidaire en rotation d'un arbre (5) tourillonnant dans un palier lisse (7) disposé dans un support tubulaire (8) solidaire de la carcasse (3). Un manchon (23) composé d'un matériau présentant une apaptitude à la déformation élastique suffisante pour absorber les vibrations, est interposé entre la face extérieure (24) du palier (7) et la face interne du support tubulaire (8).
Application notamment aux moteurs à courant continu et à commutation électronique.

FIG.1

EP 0 251 896 A1

**Description**

"Moteur électrique à palier perfectionné"

La présente invention concerne un moteur électrique, notamment pour ventilateur à hélices, dont l'arbre du rotor tourillonne dans un palier lisse disposé dans un support tubulaire solidaire de la carcasse du moteur.

Les paliers lisses, par exemple en alliage fritté, sont d'une utilisation particulièrement intéressante dans les petits moteurs électriques. Ils sont en effet auto-lubrifiants et leur prix de revient est inférieur à celui des roulements. Par rapport à ces derniers, ils ont en outre un fonctionnement plus silencieux. C'est pourquoi leur utilisation est souvent avantageuse, notamment dans le cas des moteurs électriques d'entraînement de ventilateurs, pour lesquels les performances acoustiques sont primordiales.

On connaît un type particulièrement intéressant de palier lisse qui est constitué par une seule pièce cylindrique s'étendant sur toute la partie tourillonnante de l'axe du rotor, de sorte qu'on supprime les problèmes d'alignement liés à l'utilisation de deux paliers axialement espacés.

En dépit de ces avantages, ce type de palier est encore relativement peu utilisé car sa mise en oeuvre se révèle délicate, notamment en ce qui concerne son immobilisation dans son support. Il est en effet généralement emmanché à force dans un support tubulaire solidaire de la carcasse du moteur, ou même directement dans un alésage axial pratiqué dans cette carcasse. En raison de ce contact étroit entre le palier et la carcasse du moteur, les chocs auxquels est soumise la carcasse du fait, par exemple, du balourd du rotor, sont transmis au palier qui se comporte comme un amplificateur et engendre des vibrations. Ceci est particulièrement vrai dans le cas où le rotor est solidaire de l'hélice. Dans certains cas, ce phénomène peut revêtir une prépondérance telle qu'elle annule les avantages du palier lisse à l'égard des roulements en ce qui concerne les performances acoustiques.

En outre l'alliage fritté constituant ce type de palier est relativement fragile de sorte qu'il risque de se détériorer par suite de l'échauffement inhérent au fonctionnement du moteur ou de contraintes mécaniques locales liées à un défaut de centrage de l'axe du rotor.

Le but de l'invention est de proposer un moteur électrique, notamment pour ventilateur à hélice, du genre précité, qui ne présente pas les inconvénients mentionnés ci-dessus.

Ainsi, le moteur électrique visé par l'invention comprend un stator supporté par une carcasse de fixation et un rotor solidaire en rotation d'un arbre tourillonnant dans un palier lisse disposé dans un support tubulaire solidaire de la carcasse.

Suivant l'invention, ce moteur est caractérisé en ce qu'un manchon composé d'un matériau présentant une aptitude à la déformation élastique suffisante pour absorber les vibrations est interposé entre la face extérieure du palier et la face intérieure du support tubulaire.

De cette façon, les vibrations auxquelles est soumise la carcasse sont absorbées par le manchon et ne sont pas transmises au palier de sorte que les performances acoustiques du moteur ne sont pas altérées. Dans la pratique, le matériau constituant le manchon est choisi de la façon suivante : le spécialiste détermine l'amplitude et la fréquence des vibrations qui sont engendrées, en l'absence du manchon. Le spécialiste choisit ensuite un manchon présentant une certaine élasticité et examine si ce manchon est capable d'absorber les vibrations. Si ce n'est pas le cas, il choisit un manchon présentant un module d'élasticité plus important ou plus faible. L'expérience a montré que les élastomères présentant un module d'élasticité intermédiaire entre ceux qui sont les plus mous et ceux qui sont les plus durs, conviennent le mieux.

De préférence on choisira les élastomères ayant la meilleure résistance au vieillissement et à l'échauffement. Suivant un mode de réalisation avantageux de l'invention, le manchon s'étend à l'intérieur de support tubulaire sur une longueur au moins égale à celle du palier et la face externe de ce manchon présente des cannelures longitudinales.

Les cannelures autorisent une circulation d'air autour du palier et empêchent ainsi un échauffement excessif de celui-ci de sorte qu'il ne risque pas de s'user prématurément.

Selon un autre mode de réalisation avantageux de l'invention, le palier comporte un collet à chacune de ses extrémités, le rebord de chaque collet reposant sur des épaulements faisant saillie sur la face interne du manchon.

Ainsi, le palier est retenu de manière efficace dans le manchon et par la même dans le support tubulaire.

De préférence, le manchon comprend deux éléments de manchon réunis par des brides repliables, qui sont moulées d'une seule pièce. Ainsi, on réalise aisément le manchon par moulage et démoulage axial.

D'autres particularités et avantages de l'invention résulteront encore de la description qui va suivre d'un moteur à courant continu et à commutation électronique conforme à l'invention.

Aux dessins annexés, donnés à titre d'exemples non limitatifs :

    - la figure 1 est une vue en coupe radiale d'un moteur électrique conforme à l'invention,

    - la figure 2 est une vue en perspective des deux éléments de manchon selon l'invention,

    - la figure 3 est une vue en plan du manchon en position de montage,

    - la figure 4 est une vue en perspective d'un palier lisse selon l'invention,

    - la figure 5 est une vue en coupe radiale du manchon,

    - la figure 6 est une demi-coupe longitudinale du manchon suivant le plan VI-VI de la figure 5, et

    - la figure 7 est une demi-section longitudinale du manchon suivant le plan VII-VII de la figure 5.

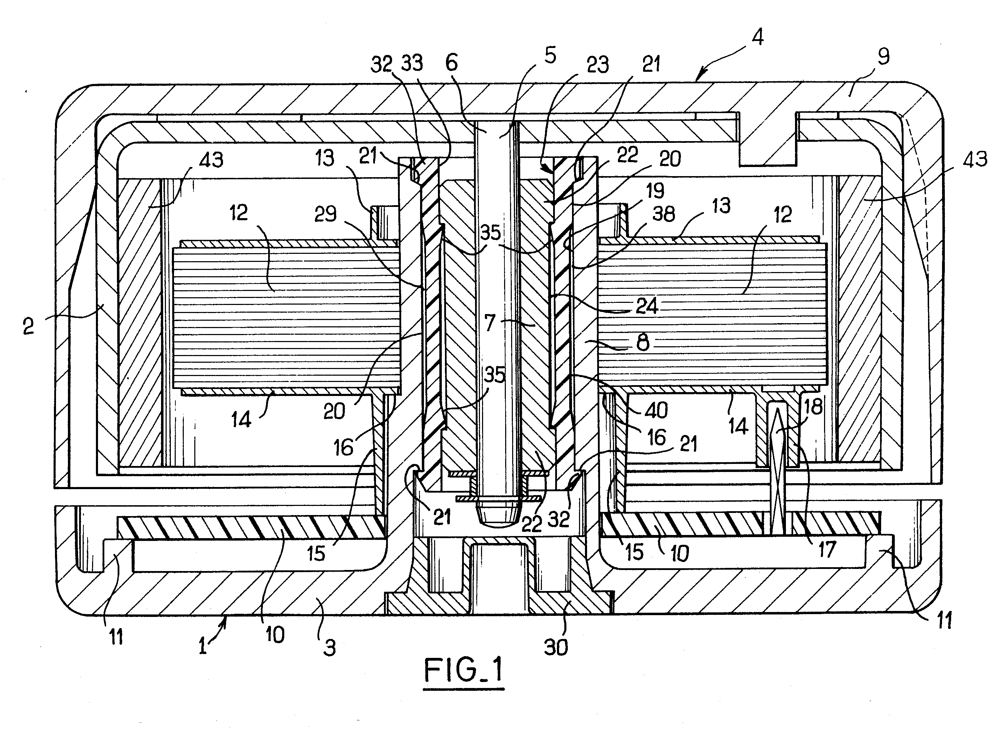

Le moteur électrique illustré à la figure 1 comprend un stator 1 supporté par un flasque 3 formant carcasse de fixation et un rotor 4 solidaire en rotation d'un arbre 5 encastré à une 6 de ses extrémités dans une cloche de fermeture du champ magnétique 2, cet arbre 5 tourillonnant dans un palier lisse 7 disposé dans un support tubulaire 8 solidaire du flasque 1.

Le blocage en translation de l'arbre 5 du rotor 4 par rapport au stator 1 est assuré de manière classique.

Dans l'exemple illustré, le moteur est à rotor extérieur et la cloche de fermeture du champ magnétique 2 est rendue solidaire d'une chape 9 destinée par exemple à supporter l'hélice d'un ventilateur entraîné par ce moteur.

Le stator 1 comprend une platine 10 de circuit imprimé supportant les éléments (non représentés) du circuit électronique de commande du moteur. Cette platine 10 est placée en appui sur des butées 11 issues de moulage avec le flasque 3 en même temps que le support tubulaire 8.

Le stator 1 comprend en outre un paquet de tôles 12 sur lequel sont bobinés les enroulements statoriques (non représentés) destinés à coopérer en rotation avec un aimant annulaire 43 porté par la face interne du carter 2, ce paquet de tôles 12 présentant un alésage central dont le diamètre est égal au diamètre extérieur du support 8, sur lequel il est emmanché de façon que son axe, celui du support 8 et celui du flasque 3 soient alignés. Ce paquet de tôle 12 est recouvert d'un habillage isolant, formé de deux coupelles, l'une supérieure 13, l'autre inférieure 14, s'emboîtant axialement l'une dans l'autre et réalisées, par exemple, en matière plastique injectée. La coupelle inférieure 14 comporte un pied central cylindrique 15 qui est en appui sur la platine 10 de circuit imprimé. Pour conforter cet appui, le support tubulaire 8 est muni d'épaulements 16 qui soutiennent la coupelle inférieure 14. Celle-ci présente encore des piliers 17 supportant chacun une broche conductrice 18 sur laquelle est enroulée l'une des extrémités du bobinage statorique. L'autre extrémité de la broche 18 est enfichée dans la platine 10 et reliée aux pistes conductrices imprimées sur celle-ci de façon à assurer la liaison électrique entre l'enroulement statorique correspondant et le circuit électronique de commande du moteur.

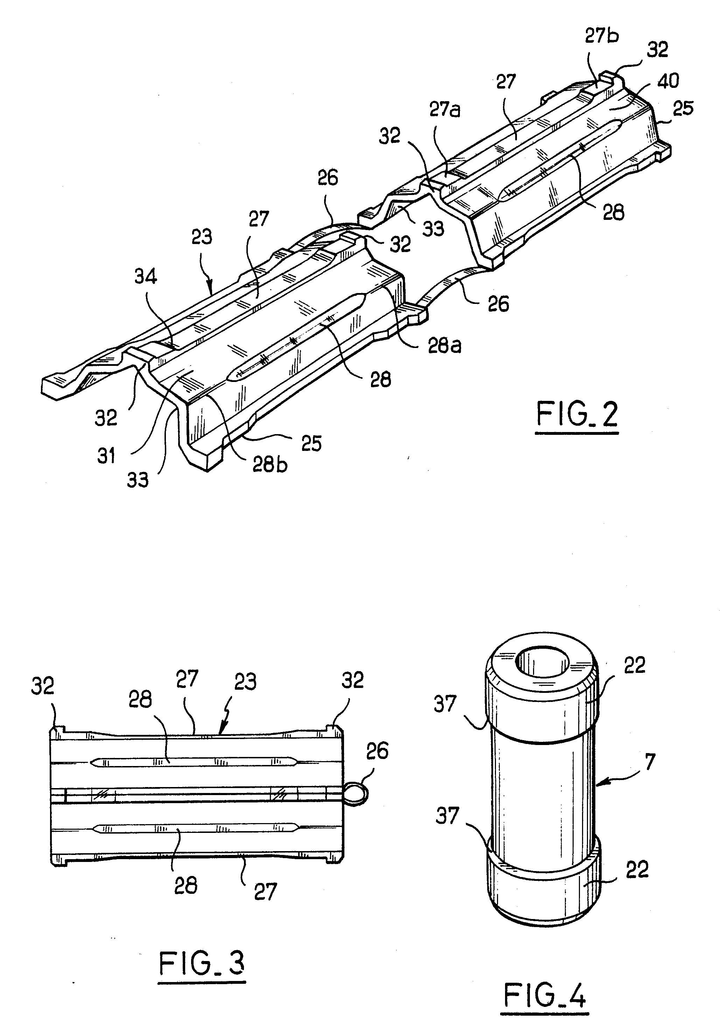

Par ailleurs, la face interne 19 du support tubulaire 8 présente une saillie 20 qui s'étend sur une hauteur sensiblement égale à celle du palier lisse 7, un épaulement annulaire 21 étant ménagé sur cette face interne 19 de part et d'autre de la saillie 20. Le palier 7 comporte un collet 22 à chacune de ses extrémités (fig. 4). L'axe de ce palier 7, celui du support 8 et de l'arbre 5 du rotor 4 sont alignés. Un bouchon 30 obture enfin l'orifice créé par l'alésage du support 8 dans le flasque 3.

Conformément à l'invention, un manchon 23, composé d'un matériau présentant une aptitude à la déformation élastique suffisante pour absorber les vibrations et les chocs, est interposé entre la face extérieure 24 du palier 7 et la face interne 19 du support tubulaire 8 et s'étend à l'intérieur de celui-ci sur une longueur au moins égale à celle du palier 7. Ce manchon 23 est de préférence réalisé en un élastomère moulé d'une seule pièce, qui possède de très bonnes caractéristiques mécanique et physiques, notamment en ce qui concerne la tenue en température et au vieillissement. C'est le cas par exemple du produit commercialisé sous la marque HYTREL par DUPONT DE NEMOURS dont la demanderesse a vérifié par expérimentation l'adéquation au but visé par l'invention. Pour faciliter le moulage et permettre un démoulage strictement axial, le manchon comprend (fig. 2) deux éléments de manchon 25 de forme semi-cylindrique qui sont réunis par deux brides 26 moulées d'une seule pièce avec les deux éléments. Ces deux brides 26 s'étendent de préférence suivant l'axe des éléments de manchon 25 de sorte qu'après pliage, c'est-à-dire lorsque le manchon 23 est prêt à être monté dans le support tubulaire 8 (fig. 3), elles soient situées à l'extérieur de l'alésage formé par ce support et ne gênent pas l'introduction du manchon 23 dans celui-ci. Cependant, une disposition latérale des brides 26 par rapport aux éléments de manchon 25 serait envisageable pourvu qu'elles soient de section suffisamment mince pour être arasées au moment du montage du manchon 23 dans le support 8. La présence de ces brides n'est en effet plus nécessaire une fois le montage effectué.

Les figures 2 et 5 à 7 illustrent de manière plus détaillée la forme de réalisation du manchon 23.

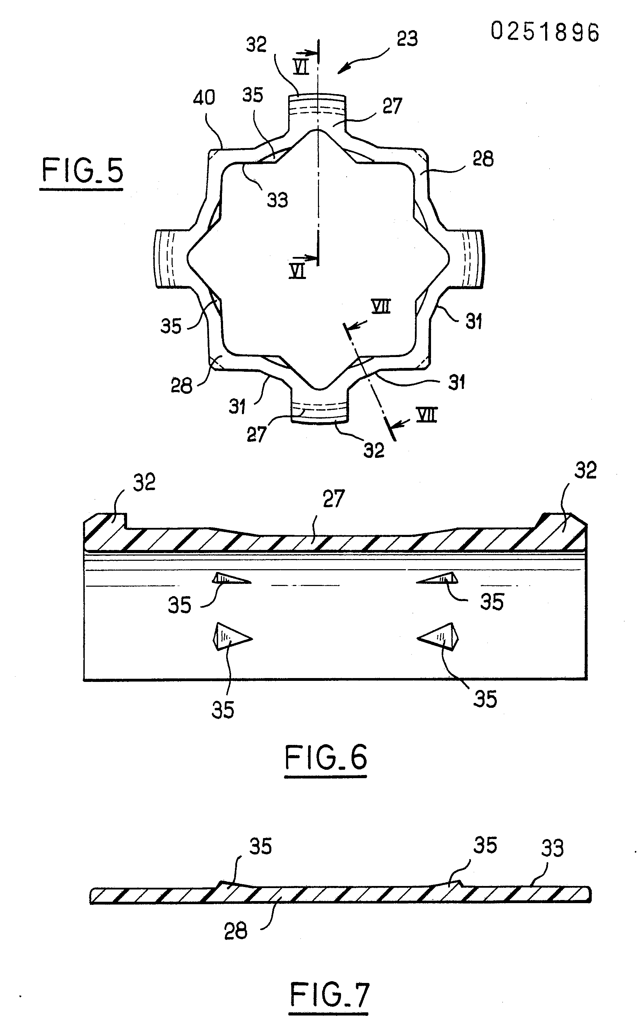

La face externe 40 du manchon 23 présente des cannelures longitudinales, les unes 27 de section rectangulaire, les autres 28 de section triangulaire, alternant régulièrement sur le pourtour du manchon 23. La hauteur de ces cannelures 27, 28 est plus importante au voisinage de leurs extrémités, respectivement 27 a, 27 b et 28 a, 28 b, de sorte que la circonférence enveloppe d'une section radiale du manchon 23 effectuée dans cette région a un diamètre sensiblement égal à celui de l'alésage du support tubulaire 8. La hauteur de la zone d'appui ainsi réalisée est sensiblement celle des collets 22 du palier 7, de sorte que le manchon 23 est au contact du support 8 uniquement dans cette zone et qu'un interstice annulaire 29 est ménagé entre ces deux éléments dans la partie médiane de l'assemblage. Cet interstice 29, combiné avec les stries longitudinales 31 (fig. 5) créées entre les cannelures 27, 28 adjacentes permet une meilleure circulation de l'air dans cette région du palier 7 et limite le contact avec la structure du stator 1, ce qui permet une réduction très sensible de l'échauffement provoqué, au voisinage du palier 7, par le fonctionnement du moteur.

Les cannelures de section rectangulaire 27 sont prolongées, radialement, à chacune de leurs extrémités 27 a, 27b, par un crochet 32 présentant un chanfrein 34 (fig. 2). Les crochets 32 s'engagent, au montage du manchon 23 dans l'alésage du support 8, sur les épaulements 21 définis par la saillie 20 (fig. 1), de ce support 8. Le manchon 23 est ainsi solidement maintenu dans le support 8. Le maintien du palier lisse 7 dans ce manchon, est lui-même assuré au moyen d'épaulements 35 faisant saillie sur la paroi interne 33 de celui-ci et sur lesquels reposent les rebords 37 formés par les collets 22 du palier lisse 7 (fig. 4). Après montage, le palier 7 n'est en contact avec la paroi interne 33 du manchon 23 qu'en regard des collets 22 de sorte qu'un interstice annulaire 38 (fig. 1) est également ménagé entre le manchon 23 et le palier 7 ce qui favorise aussi la circulation d'air entre ces éléments.

Le montage peut être effectué de deux façons :
- par pliage des brides de liaison 26; les deux éléments de manchon 25 sont assemblés autour du palier lisse 7 et l'ensemble est introduit à force dans l'alésage du support 8, jusqu'à encliquetage élastique des crochets 32 sur les épaulements 21 de ce support;
- par pliage des brides de liaison 26; les deux éléments de manchon 25 sont accolés l'un à l'autre et le manchon 23 ainsi reconstitué, est introduit dans l'alésage du support 8, jusqu'à encliquetage du crochet 32 comme précédemment. Le palier 7 est ensuite emmanché à force dans le manchon 23, jusqu'à ce que les épaulements 35 se placent en appui sur les rebords 37 des collets 22 du palier 7.

Dans l'un et l'autre cas, on comprend que l'automatisation de cette procédure de montage est particulièrement facile à réaliser. En effet, elle ne nécessite que deux opérations sans exiger une très grande précision, puisque la nature élastique du manchon 23, outre son rôle d'amortisseur de vibrations, permet de compenser les défauts de concentricité pouvant exister entre les différents éléments.

Sans sortir du cadre de la présente invention, la configuration du manchon, telle qu'elle vient d'être décrite, pourra être modifiée, notamment pour s'adapter aux différents types de paliers lisses existants, en particulier en ce qui concerne le nombre et le profil des cannelures et l'emplacement des épaulements.

Par ailleurs, même si le moteur décrit est un moteur à courant continu et à commutation électronique, l'invention n'est pas bien entendu limitée à ce type de moteur mais peut être appliquée à tout moteur électrique à arbre tournant, à courant alternatif ou continu.

**Revendications**

1. Moteur électrique, notamment pour ventilateur à hélice, comprenant un stator (1) supporté par une carcasse de fixation (3) et un rotor (4) solidaire en rotation d'un arbre (5) tourillonnant dans un palier lisse (7) disposé dans un support tubulaire (8) solidaire de la carcasse (1), caractérisé en ce qu'un manchon (23) composé d'un matériau présentant une aptitude à la déformation élastique suffisante pour absorber les vibrations est interposé entre la face extérieure (24) du palier (7) et la face interne (19) du support tubulaire (8).

2. Moteur électrique conforme à la revendication 1, caractérisé en ce que le manchon (23) est réalisé en un élastomère moulé d'une seule pièce.

3. Moteur électrique conforme à l'une des revendications 1 ou 2, caractérisé en ce que le manchon (23) s'étend à l'intérieur du support tubulaire (8) sur une longueur au moins égale à celle du palier (7).

4. Moteur électrique conforme à l'une des revendications 1 à 3, caractérisé en ce que la face externe (40) du manchon (23) présente des cannelures longitudinales (27, 28).

5. Moteur électrique conforme à la revendication 4, caractérisé en ce que les cannelures (27, 28) sont alternativement de section rectangulaire et de section triangulaire.

6. Moteur électrique conforme à l'une des revendications 4 ou 5, caractérisé en ce que la hauteur des cannelures (27, 28) dans des régions adjacentes aux extrémités du manchon (23) est telle que ces cannelures ne sont en contact avec la face interne (19) du support tubulaire (8) qu'au regard desdites régions de telle manière qu'un interstice annulaire (29) soit ménagé entre le manchon (23) et la face interne (19) du support tubulaire (8) dans une région médiane comprise entre les régions précitées.

7. Moteur électrique conforme à l'une des revendications 5 ou 6, caractérisé en ce que les cannelures de section rectangulaire (27) sont prolongées à chacune de leurs extrémités (27 a, 27 b) par un crochet (32) qui prend appui sur épaulement annulaire (21) du support tubulaire (8) de sorte que le manchon (23) soit rendu solidaire de ce support tubulaire (8).

8. Moteur électrique conforme à l'une des revendications 1 à 7, caractérisé en ce que le palier (7) comporte un collet (22) à chacune de ses extrémités, le rebord (37) de chaque collet reposant sur des épaulements (35) faisant saillie sur la face interne (19) du manchon (23) tandis que le palier (7) n'est en contact avec la face interne (19) du manchon (23) qu'en regard desdits collets.

9. Moteur électrique conforme à l'une des revendications 1 à 8, caractérisé en ce que le manchon (23) comprend deux éléments de manchon (25) réunis par des brides repliables (26).

0251896

FIG_1

0251896

FIG_2

FIG_3

FIG_4

0251896

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 559 319  (E.B.M.)<br>* Page 7, ligne 3 - page 8, ligne 2; figure 3 * | 1 | H 02 K   5/24<br>H 02 K   5/167 |
| | --- | | |
| A | EP-A-0 149 228  (PAPST)<br>* Page 8, ligne 13 - page 9, ligne 4; figure 1 * | 1,2 | |
| | --- | | |
| A | FR-A-2 350 721  (SKF)<br>* Page 2, lignes 31-39; figure * | 1,3 | |
| | --- | | |
| A | EP-A-0 160 971  (PAPST)<br>* Page 11, lignes 1-12; figures 3,8 * | 1,8 | |
| | ----- | | |

**DOMAINES TECHNIQUES RECHERCHES (Int. Cl.4)**

H 02 K   5/00

Le présent rapport de recherche a été établi pour toutes les revendications

| Lieu de la recherche<br>LA HAYE | Date d'achèvement de la recherche<br>15-10-1987 | Examinateur<br>LE GUAY P.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82